Europäisches Patentamt

(19) European Patent Office

Office européen des brevets

(11) Publication number: **0 246 344**
**B1**

# (12) EUROPEAN PATENT SPECIFICATION

(45) Date of publication of the patent specification:
27.12.89

(51) Int. Cl.⁴: **C01B 13/11**

(21) Application number: 86106921.9

(22) Date of filing: 21.05.86

(54) Ozone generating apparatus.

(43) Date of publication of application:
25.11.87 Bulletin 87/48

(45) Publication of the grant of the patent:
27.12.89 Bulletin 89/52

(84) Designated Contracting States:
DE FR GB

(56) References cited:
CH-A- 266 515

JAPANESE PATENTS GAZETTE, Section CH (chemical),
week 8639, 5 November 1986, J6-J (Chemical
Engineering), page 17, abstract no. J6 1186-206-A,
Derwent Publications Ltd, London, GB; &
JP-A-86 256 193 (MITSUBISHI DENKI) 19-08-1986

(73) Proprietor: MITSUBISHI DENKI KABUSHIKI KAISHA, 2-3,
Marunouchi 2-chome Chiyoda-ku, Tokyo 100(JP)

(72) Inventor: Sasaki, Toshihiko c/o Mitsubishi Denki K.K.,
Power & Ind. Syst. C. 1-2, Wadasaki-cho, 1-chome,
Hyogo-ku kobe-shi Hyogo(JP)
Inventor: Sunayama, Yooji c/o Mitsubishi Denki K.K.,
Power & Ind. Syst. C. 1-2, Wadasaki-cho, 1-chome,
Hyogo-ku kobe-shi Hyogo(JP)
Inventor: Yoshida, Isao c/o Mitsubishi Denki K.K., Power
& Ind. Syst. C. 1-2, Wadasaki-cho, 1-chome, Hyogo-ku
kobe-shi Hyogo(JP)
Inventor: Endo Masayuki c/o Tada Senki K.K., Okayama
Works Shimakosaka 488, Oku-cho, Oku-gun
Okayama(JP)

(74) Representative: Lehn, Werner, Dipl.-Ing. et al, Hoffmann,
Eitle & Partner Patentanwälte Arabellastrasse 4,
D-8000 München 81(DE)

## Description

### FIELD OF THE INVENTION

This inventions relates to an ozone generating apparatus, and more particularly to an ozone generating apparatus which is compact and high in safety.

### BACKGROUND OF THE INVENTION

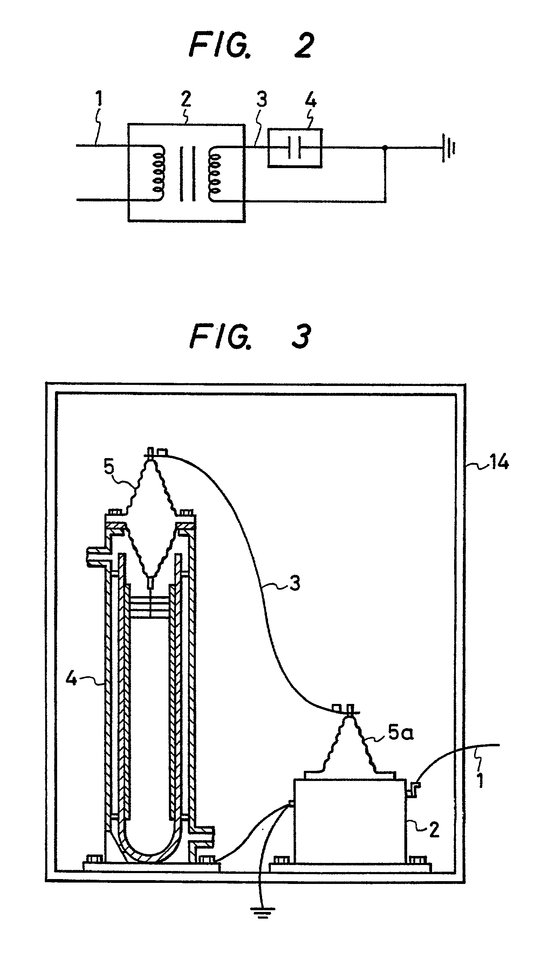

Ozone generating apparatus are employed for obtaining ozone by the high voltage discharge in air. Figure 2 shows the essential components of an ozone generating apparatus, wherein a high voltage transformer 2 is connected to a power source 1 for applying a very high voltage to an ozonizer 4 by a high voltage feeder line 3 which connects the transformer 2 to the ozonizer, and wherein a high voltage discharge occurs within the ozonizer.

Figure 3 illustrates an example of a conventional ozone generating apparatus. A housing 14 houses a high voltage transformer 2 and an ozonizer 4 which are fixedly mounted side by side and separate from each other. The ozonizer supports a high voltage bushing 5 within the upper, open end of the same. The bare high voltage bushing 5 is connected to a bushing 5a of the high voltage transformer 2 through a high voltage power feeder or line 3.

In the conventional ozone generating apparatus of Figure 3, there exists the problem that the high voltage transformer 2 and the ozonizer 4 are physically separate from each other, the result of which is that the apparatus is bulky. Additionally, this situation is highly dangerous because the high voltage power feeder or line 3 and the high voltage bushing 5 are relatively exposed.

It is, therefore, an object of the present invention to eliminate the foregoing disadvantages and to provide an ozone generating apparatus which is compact and which is high in safety.

### SUMMARY OF THE INVENTION

The present invention is directed to an ozone generating apparatus comprising a housing, a high voltage transformer mounted within said housing and having a casing. An ozonizer is fixedly mounted within said housing, and a high voltage bushing is fixedly mounted to one end of said ozonizer and electrically connected to the transformer. The improvement resides in said ozonizer comprising a cylindrical electrode tube having a closed end and an open end with said open end of said cylindrical electrode tube being fixedly mounted to the high voltage transformer casing and about the high voltage bushing.

### BRIEF DESCRIPTION OF THE DRAWINGS

Figure 1 is a vertical elevational view, partially in section, of an ozone generating apparatus forming a preferred embodiment of the present invention.

Figure 2 is an electrically schematic circuit diagram of the basic components of an ozone generating apparatus.

Figure 3 is a vertical elevational view, partially in section, of a conventional ozone generating apparatus.

### DESCRIPTION OF THE PREFERRED EMBODIMENT

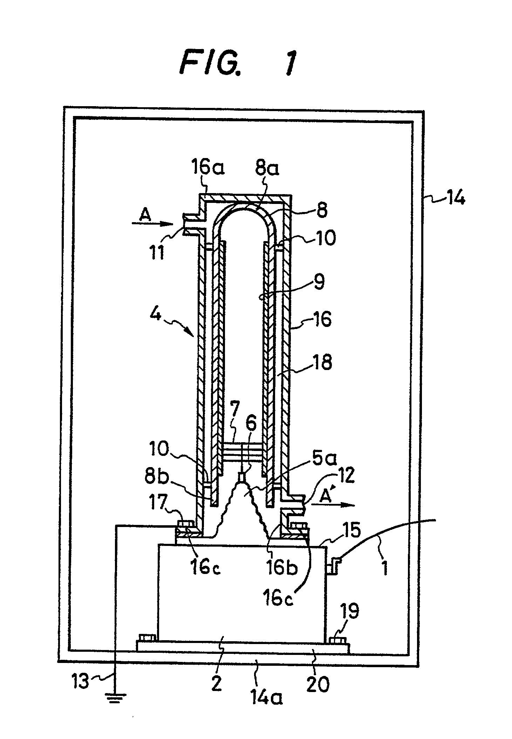

Referring to Figure 1, the preferred embodiment of the ozone generating apparatus of the present invention is composed of a series of components which are identical to that of the prior art apparatus of Figure 3 and identically numbered. In Figure 1, the high voltage transformer 2 is fixedly mounted by way of its base 20 to the bottom portion 14a of housing 14 via bolts or screws as at 19. The high voltage transformer 2 is provided with a casing 15 of rectangular form, and mounted to the casing 15 and projecting upwardly therefrom at the center is a high voltage bushing 5a.

Ozonizer 4 is of generally cylindrical form, being provided with a ground electrode tube 16 of elongated cylindrical shape having one end closed at 16a and having its opposite end 16b open and terminating in flanges 16c. Flanges 16c are fixedly mounted via fastening bolts 17 to casing 15 with the open end portion 16b of the ground electrode tube 16 facing downwardly. The high voltage bushing 5a, which is fixed to the upper portion of casing 15, supports a conductive bar 6 which extends vertically upwardly and penetrates through the high voltage bushing 5a at its center to make appropriate connection with the high voltage transformer 2.

Internally of the ground electrode tube 16 of ozonizer 4 is a dielectric glass discharge tube 8, also of cylindrical shape and having one end 8a closed and having its opposite end 8b open. The diameter of the dielectric glass discharge tube 8 is smaller than that of the ground electrode tube 16. Tube 8 is insertably mounted within the inside of the ground electrode tube 16 and is fixedly positioned by means of spacers 10, near its closed upper end 8a and its open bottom end 8b. Thus, a space 18 is formed between the ground electrode tube 16 and the dielectric glass discharge tube 8.

A conductive film 9 is formed on the inner surfaces of the electric glass discharge tube 8 and is connected to the projecting end of conductive bar 6 via a power supply brush 7 which spans across the conductive film 9. The ground electrode tube 16 is provided with an air inlet 11, and adjacent its upper closed end 6a, and an air outlet 12 is formed within the ground electrode tube 16 adjacent the flange 16c at the open end 16b of that tube. A ground bar 13 is provided for the ground electrode tube 16.

Further, a power source feeder or line 1 extends through housing 14 and connects to the high voltage transformer 2.

In the apparatus described above, when a current is conducted from transformer 2, via bushing 5a, to the dielectric glass discharge tube 8 through conductive bar 6 and the power supply brush 7, and a high voltage is applied across the inner surface of the electric glass discharge tube 8 and the inner surface of the ground electrode tube 16, silent electrical discharge occurs therebetween so as to produce ozone from a part of the air fed into space 18 from air inlet 11, as indicated by arrow A, while ozonized air is removed from outlet 12, as indicated by arrow AE

As may be appreciated, the ozone generating apparatus of Figure 1 is highly compact because the high voltage transformer 2, the high voltage bushing 5a, and the ozonizer 4 are integral with each other, and in the illustrated embodiment, constituting a vertically stacked array. The operation of the same is very safe because the high voltage bushing 5a is accommodated within the ground metal of ground electrode tube 16 under conditions where it is surrounded by casing 15 and the ground electrode tube 16.

Although the ground electrode tube 16 and the high voltage bushing 5a constitute one pair of the illustrated embodiment, the invention is applicable to an ozone generating apparatus provided with two pairs or more of earth electrode tubes and high voltage bushings. Moreover, each ground electrode tube 16 and electric glass discharge tube 8 may be of varied shape, so long as they can accommodate the high voltage bushing 5a therein. Furthermore, incidental equipment or ozone processing equipment for the ozone generating apparatus may be further accommodated in the housing 14 and the ozone generating apparatus itself may be oriented horizontally rather than vertically as shown, while being maintained in integrated fashion in accordance with Figure 1 and in contrast to that of Figure 3.

In general, the ozone generating apparatus of the present invention is characterized by the high voltage bushing being fixed to the casing of the high voltage transformer and inserted interiorly of the cylindrical shaped ozonizer through an open end thereof with the other end of the ozonizer being closed and the ozonizer and the casing of the voltage transformer being fixedly coupled to each other. As a result thereof, the structural assembly is highly compact since the high voltage transformer is integrated directly with the ozonizer and the safety of operation is improved because the high voltage bushing is maintained internally of the ozonizer so as to obviate the exposure of any portion thereof.

While the invention has been particularly shown and described with reference to a preferred embodiment thereof, it will be understood by those skilled in the art that various changes in form and details may be made therein without departing from and scope of the invention.

## Claims

1. Ozone generating apparatus comprising a housing (14), a high voltage transformer (2) within said housing (14), said high voltage transformer (2) having a casing (15), an ozonizer (4) fixedly mounted within said housing (14), a high voltage bushing fixedly mounted to one end of said ozonizer (4) and electrically connected to said high voltage transformer (2), characterized by said ozonizer (4) comprising a cylindrical ground electrode tube (16) having a closed end (16a) and an open end (16b), said high voltage bushing (5a) is fixedly mounted to said high voltage transformer casing (15) and projects outwardly thereof, and said open end (16b) of said cylindrical ground electrode tube (16) is fixedly mounted to said high voltage transformer casing (15) about said high voltage bushing (5a), and said apparatus further comprises means internally of said cylindrical ground electrode tube (16) for directly connecting said high voltage bushing (5a) to said ozonizer (4).

2. The ozone generating apparatus as claimed in claim 1, wherein said ozonizer (4) further comprises a dielectric glass discharge tube (8) of cylindrical shape, of a diameter less than that of the ground electrode tube (16), insertably mounted within the inside of said ground electrode tube (16), and fixedly spaced therefrom and having a closed end (8a) and an open end (8b), said open end (8b) being proximate to the open end (16b) of the ground electrode tube (16), a conductive film (9) formed on the inner surface of the electric glass discharge tube (8), and wherein said means internally of the cylindrical ground electrode tube (16) for directly connecting said high voltage bushing (5a) to said ozonizer (4), comprises a conductive bar (6) extending outwardly of said high voltage bushing (5a) into the open end (8b) of said electric glass discharge tube (8) in proximity to said conductive film (9), and a power supply brush (7) connecting the end of said conductive bar (6) to said electric glass discharge tube conductive film (4).

## Patentansprüche

1. Ozonerzeugungsgerät mit einem Gehäuse (14), einem Hochspannungstransformator (2) innerhalb des Gehäuses (14), wobei der Hochspannungstransformator (2) eine Ummantelung (15) aufweist, einem innerhalb des Gehäuses (14) fest angeordneten Ozonisator (4), einer an einem Ende des Ozonisators (4) fest angeordneten und mit einem Hochspannungstransformator (2) elektrisch verbundenen Hochspannungsdurchführung, dadurch gekennzeichnet, daß der Ozonisator (4) ein zylindrisches Masseelektrodenrohr (16) mit einem geschlossenen Ende (16a) und einem offenen Ende (16b) enthält, die Hochspannungsdurchführung (5a) fest an der Ummantelung (15) des Hochspannungstransformators angeordnet ist und von dieser nach außen herausragt, und das offene Ende (16b) des zylindrischen Masseelektrodenrohres (16) fest an der Ummantelung (15) des Hochspannungstransformators um die Hochspannungsdurchführung (5a) herum angeordnet ist, und das Gerät innerhalb des zylindrischen Masseelektrodenrohrs (16) Mittel zum direkten Verbinden der Hochspannungsdurchführung (5a) mit dem Ozonisator (4) enthält.

2. Ozonerzeugungsgerät nach Anspruch 1, dadurch gekennzeichnet, daß der Ozonisator (4) au-

ßerdem eine dielektrische Glasentladungsröhre (8) von zylindrischer Form mit einem Durchmesser kleiner als der des Masseelektrodenrohres (16) aufweist, welche Glasentladungsröhre (8) innerhalb des Masseelektrodenrohres (16) einfügbar angeordnet ist und von diesem fest beabstandet ist und ein geschlossenes Ende (8a) und ein offenes Ende (8b) aufweist, wobei das offene Ende (8b) in der Nähe des offenen Endes (16b) des Masseelektrodenrohres (16) liegt und einen auf der inneren Oberfläche der elektrischen Glasentladungsröhre (8) gebildeten leitfähigen Film (9) enthält, und daß die in dem Innenraum des zylindrischen Masseelektrodenrohres (16) angeordneten Mittel zum direkten Verbinden der Hochspannungsdurchführung (5a) mit dem Ozonisator (4) eine leitfähige, sich von der Hochspannungsdurchführung (5a) nach außen in der Nähe des leitfähigen Films (9) in das offene Ende (8b) der elektrischen Glasentladungsröhre (8) erstreckende Stange (6) und eine das Ende der leitfähigen Stange (6) mit der elektrischen Glasentladungsröhre verbindende Energiequellenbürste (7) enthalten.

## Revendications

1. Un générateur d'ozone comprenant une enceinte (14), un transformateur de haute tension (2) dans ladite enceinte (14), ledit transformateur haute tension (2) ayant un boitier (15), un ozoniseur (4) monté d'une manière fixe dans ladite enceinte (14), un isolateur haute tension monté d'une manière fixe à l'une des extrémités dudit ozoniseur (4) et connecté électriquement audit transformateur haute tension (2), caractérisé en ce que ledit ozoniseur (4) comprend un tube à électrode de masse cylindrique (16) ayant une extrémité fermée (16a) et une autre ouverture (16b), ledit isolateur haute tension (5a) est monté d'une manière fixe audit boitier (15) du transformateur haute tension et se prolonge vers l'extérieur de celui-ci, et ladite extrémité ouverte (16b) dudit tube à électrode de masse cylindrique (16) est montée d'une manière fixe audit boitier de transformateur haute tension (15) près dudit isolateur (5a), et ledit appareillage comprend en plus des moyens à l'intérieur dudit tube à électrode de masse cylindrique (16) pour connecter directement ledit isolateur haute tension (5a) audit ozoniseur (4).

2. Le générateur d'ozone selon la revendication 1 dans lequel ledit ozoniseur (4) comprend, outre un tube à décharge en verre diélectrique (8) de forme cylindrique, d'un diamètre moindre que le tube à électrode de masse (16) monté de façon à s'insérer dans l'intérieur dudit tube à électrode de masse (16) et espacé d'une manière fixe et ayant une extrémité fermée (8a) et une extrémité ouverte (8b), ladite extrémité ouverte (8b) étant proche de l'extrémité ouverte (16b) du tube à électrode de masse (16), un film conducteur formé sur la surface intérieure du tube à décharge en verre diélectrique (8) et dans lequel lesdits moyens intérieurs au tube à électrode de masse cylindrique (16) pour connecter directement ledit isolateur haute tension (5a) audit ozoniseur (4) comprend une barre conductrice (6) s'étendant vers l'extérieur dudit isolateur haute tension (5a) vers l'extrémité ouverte (8b) dudit tube à décharge en verre diélectrique (8) à proximité dudit film conducteur (9) et un contact balai d'amenée en énergie (7) connectant l'extrémité de ladite barre conductrice (6) audit film conducteur (9) du tube à décharge en verre diélectrique (8).

# FIG. 1

# FIG. 2

# FIG. 3